# EUROPÄISCHE PATENTSCHRIFT

(11) **EP 2 127 975 B1**
(45) Veröffentlichungstag und Bekanntmachung des Hinweises auf die Patenterteilung: **25.01.2012**
(21) Anmeldenummer: 09002319.3
(22) Anmeldetag: 19.02.2009
(51) Int. Cl.: B60T 8/17, B60T 8/18, B60T 10/00, B60T 13/66

(54) **Bremseinrichtung für ein Fahrzeug**
Braking device for a vehicle
Dispositif de frein pour un véhicule

(30) Priorität: 21.05.2008 DE 102008024627
(43) Veröffentlichungstag der Anmeldung: 02.12.2009
(73) Patentinhaber: WABCO GmbH, 30453 Hannover (DE)
(72) Erfinder: Eckert, Horst, 31547 Rehburg-Loccum (DE); Gaulke, Arnd, 30974 Wennigsen (DE)

(56) Entgegenhaltungen:
- EP-A1- 0 974 505

## Beschreibung

Die Erfindung betrifft eine Bremseinrichtung für ein Fahrzeug mit einer Dauerbremsanordnung, sowie ein Verfahren zum Betreiben einer Bremseinrichtung.

Es ist allgemein bekannt, insbesondere Nutzfahrzeuge, beispielsweise Lastkraftwagen, mit einer Dauerbremsanordnung, die eine Dauerbremse umfasst, zu versehen. Dauerbremsen dienen unter anderem dazu, das Fahrzeug zu verzögern, damit verschleißbehaftete Reibungsbremsen des Fahrzeugs, die als Betriebsbremse eingesetzt sind, geschont werden. Als Dauerbremsen werden beispielsweise Motorbremsen und/oder Retarder, wie hydrodynamische Strömungsbremsen oder Wirbelstrombremsen, eingesetzt. Die Dauerbremse wirkt üblicherweise auf angetriebene Achsen des Kraftfahrzeugs ein. Bei Nutzfahrzeugen ist die angetriebene Achse in den meisten Fällen die Hinterachse.

Das Fahrzeug kann verschiedene Bremsregelsysteme enthalten, mit denen die Dauerbremse kommunikativ verbunden ist, und über welche die Dauerbremse betätigt werden kann. Solch ein Regelsystem kann z.B. ein elektronisch gesteuertes Bremssystem (EBS), ein Antiblockiersystem (ABS), ein Abstandsregeltempomat (ACC) oder ein konventioneller Tempomat/Bremsomat sein. Solche Bremsregelsysteme sind üblicherweise so eingerichtet, dass sie unabhängig von einem Fahrer selbständig über einen Einsatz der Dauerbremse entscheiden, insbesondere ob die Dauerbremse neben einer Betriebsbremse eingesetzt werden soll. Durch diese "Dauerbremsenintegration" lässt sich die Betriebsbremse effektiv unterstützen und vor Verschleiß schonen. In der Regel ist ein manuell betätigbares Bedienelement vorgesehen, über das ein Fahrer dem Bremsregelsystem die "Erlaubnis" erteilt, die Dauerbremse wie oben beschrieben selbständig steuern zu dürfen. Dies entspricht einer Aktivierung der Dauerbremsenintegration. Die Dauerbremsenintegration lässt sich auch vom Fahrer deaktivieren. Das Bremsregelsystem hat in diesem Fall nicht die Möglichkeit, die Dauerbremse eigenständig zu steuern.

Aus der EP 0 974 505 A1 ist ein Verfahren zur Steuerung der Bremsanlage eines Fahrzeugs mit einer steuerbaren Betriebsbremse und einer steuerbaren Dauerbremse bekannt, wobei die Betriebs- und Dauerbremse aufeinander abgestimmt angesteuert werden und die Dauerbremse bei jedem Bremsvorgang aktiviert wird und abhängig vom Bremswunsch des Fahrers sowie von Fahrzustandsgrössen und/oder Fahrbahnzustandsgrössen und/oder Betriebszuständen des Fahrzeugs angesteuert wird (integrierte Betätigung der Dauerbremse).

Nachteil bekannter Fahrzeuge mit derartigen Dauerbremsanordnungen ist, dass einem Fahrer die Entscheidung überlassen ist, ob er grundsätzlich die Dauerbremsenintegration aktivieren möchte, oder ob er diese deaktiviert oder deaktiviert belässt. Dies kann zur Folge haben, dass die Dauerbremsenintegration deaktiviert bleibt, obwohl eine Aktivierung der Dauerbremsenintegration vorteilhaft oder sogar notwendig wäre.

Aufgabe der vorliegenden Erfindung ist es, eine Bremseinrichtung für ein Fahrzeug zu schaffen, die insbesondere genannte Nachteile beseitigt oder zumindest reduziert. Eine weitere Aufgabe der Erfindung ist es, ein Verfahren zu schaffen, mit dem eine derartige Einrichtung betrieben werden kann.

Diese Aufgaben werden durch eine Bremseinrichtung und ein Verfahren zum Betreiben einer Bremseinrichtung nach den unabhängigen Ansprüchen gelöst.

Die erfindungsgemäße Bremseinrichtung umfasst ein Bremsregelsystem mit mindestens einer Dauerbremse, wobei das Bremsregelsystem für eine Dauerbremsenintegration eingerichtet ist, ein manuell betätigbares Bedienelement zum zumindest Aktivieren und Deaktivieren der Dauerbremsenintegration und eine Steuereinheit, wobei die Steuereinheit derart eingerichtet ist, dass bei deaktivierter Dauerbremsenintegration und bei Vorliegen bestimmter Kenngrößen eine durch die Steuereinheit aktivierbare, zur Bremseinrichtung gehörende Signalvorrichtung aktiviert wird und/oder die Dauerbremsenintegration aktiviert wird.

Als Kenngrößen eignen sich solche Größen, die eine Aussage darüber erlauben, ob das Aktivieren der Dauerbremsenintegration insbesondere in der aktuellen Situation des Fahrzeugs sinnvoll ist. Derartige Kenngrößen sind beispielsweise Fahrzeugmasse, Hinterachsenlast, Schlupfbedingungen, Topografie, Reibwert Rad/Fahrbahn und Temperatur von mindestens einer Fahrzeugbremse.

Durch die Aktivierung der Signalvorrichtung wird einem Fahrzeugführer ein Signal gegeben, dass diesen darauf hinweist, dass ein Aktivieren der deaktivierten Dauerbremsenintegration vorteilhaft ist. Der Fahrzeugführer kann entscheiden, ob er die Dauerbremsenintegration aktivieren oder im deaktivierten Zustand belassen möchte.

Alternativ oder in Ergänzung zur Aktivierung der Signalvorrichtung kann auch eine Aktivierung der Dauerbremsenintegration erfolgen. Dies bietet sich für Fahrzeugsituationen an, in denen eine solche Aktivierung unbedingt notwendig ist, beispielsweise bei drohender Überhitzung von Fahrzeugbremsen.

Dauerbremse/Retarder kann beispielsweise eine Strömungsbremse, eine Wirbelstrombremse und/oder eine Motorbremse sein. Die Kommunikation für die Übertragung von Daten/Signalen zwischen den einzelnen Komponenten kann durch elektrische Verbindungen, insbesondere durch einen Datenbus gewährleistet sein, beispielsweise einen CAN-Bus. Das Bedienelement kann beispielsweise ein Schalter, Hebel oder Taster sein. Eine derartige Bremseinrichtung lässt sich beispielsweise für Nutzfahrzeuge, wie Zugfahrzeuge, Lkw oder Busse, verwenden.

Vorzugsweise weist die Bremseinrichtung einen oder mehrere Sensoren zum Erfassen von Kenngrößen auf. Insbesondere können Sensoren anderer Systeme, beispielsweise von EBS oder ABS, falls vorhanden, verwendet werden, oder aber direkt von derartigen Systemen ermittelte Kenngrößen verwendet werden. Dies umfasst auch Kenngrößen, die über mathematische Modelle berechnet werden. Des Weiteren kann die Steuereinheit autark oder mit Steuereinheiten derartiger Systeme kombiniert oder sogar in diesen integriert sein. Die Kombination bzw. Integration kann durch zusätzliche elektronische Komponenten und/oder Programmerweiterungen umgesetzt werden.

Vorzugsweise wird die Temperatur einer Radbremse eines Fahrzeugrades mit Hilfe eines mathematischen Temperaturmodells errechnet. Temperaturmodelle ermöglichen die indirekte Erfassung der Temperatur. Beispielsweise kann die Temperatur mit Hilfe von Temperatursensoren, die in unmittelbarer Nähe eines der Bremselemente, beispielsweise einer Bremsscheibe, angeordnet sind, erfolgen. Eine Alternative ist die Ermittlung der Temperatur über ein im Belastungszustand der Bremse repräsentierendes Lastsignal, dass die Fahr zeuggeschwindigkeit mit der Anpresskraft der Bremsscheibe verknüpft, woraus die resultierende Temperaturerhöhung der Bremsscheibe ermittelt und ein voreingesteifter Temperatur eingangswert entsprechend erhöht wird. Eine weitere Alternative ist die Ermittlung der Temperatur durch Berechnung der Wärmeenergie-Zufuhr zu der Bremse aus der Abnahme der kinetischen Energie des Fahrzeugs beim Bremsvorgang. Eine weitere Alternative ist die Ermittlung der Temperatur aus der Verformung von Bauteilen der Bremse. Eine weitere Alternative ist die Auswahl eines Bauteils, dessen Temperatur ermittelt wird, derart, dass diese Temperatur den thermischen Belastungszustand der Bremse widerspiegelt, woraus auch die Temperatur der Bremse geschlossen werden kann.

Es kann die Temperatur einer oder mehrerer Radbremsen eines oder mehrerer Fahrzeugräder, insbesondere von einer Zugfahrzeug-Anhänger-Kombination, ermittelt und berücksichtigt werden. Die Radbremse ist im Allgemeinen eine verschleißbehaftete Reibungsbremse, beispielsweise eine Scheiben- oder Trommelbremse, die als Betriebsbremse verwendbar ist.

Vorteilhafterweise ist die Steuereinheit derart eingerichtet, dass die Signalvorrichtung einmalig oder zyklisch aktiviert wird. Im ersten Fall wird, wenn das Aktivieren der Dauerbremse sinnvoll ist und sich die Fahrzeugsituation nicht ändert, ein einmaliges Signal durch die Signalvorrichtung erzeugt, im zweiten Fall werden mehrere zeitlich versetzte Signale erzeugt.

Vorzugsweise ist die Signalvorrichtung derart ausgebildet, dass diese bei Aktivierung ein akustisches, optisches und/oder haptisches Signal erzeugt. Eine Signalvorrichtung kann beispielsweise ein Display, ein Lämpchen, und/oder einen Lautsprecher umfassen.

Vorzugsweise ist die Steuereinheit derart eingerichtet, dass, wenn nach Aktivierung der Signalvorrichtung innerhalb einer bestimmten Frist das Bedienelement nicht betätigt wird, die Steuereinheit die Dauerbremsenintegration aktiviert, insbesondere dann aktiviert, wenn zusätzlich die Temperatur zumindest einer Radbremse des Fahrzeugs einen festgelegten Temperaturschwellenwert überschritten hat. Dies ist besonders vorteilhaft, wenn einen oder mehreren als Betriebsbremsen vorgesehenen Radbremsen des Fahrzeugs eine Überhitzung droht. Der Schwellenwert wird vorzugsweise auf einen Wert festgelegt, der unterhalb des kritischen Temperaturwertes liegt, bei dem der Verschleiß der Radbremse überhöht ist und/oder eine Beschädigung der Radbremse droht.
Neben der Möglichkeit, die Dauerbremsenintegration durch Betätigen des Bedienelementes innerhalb der bestimmten Frist zu aktivieren, kann auch eine Möglichkeit vorgesehen sein, die Dauerbremsenintegration deaktiviert zu belassen und eine automatische Aktivierung der Dauerbremsenintegration nach Ablauf der Frist zu verhindern. Eine Möglichkeit wäre, dass, wenn das Bedienelement als Schalter oder Hebel ausgelegt ist, das Umlegen zunächst in die "ON" und dann in die "OFF" Stellung innerhalb eines kurzen Zeitintervalls die Steuereinheit als Signal dafür erkennt, dass die Dauerbremsenintegration deaktiviert bleiben soll. Bei einem Taster kann dies durch ein einmaliges Betätigen umgesetzt sein. Es kann auch ein zusätzliches Element vorgesehen sein, mit dem der Zustand, dass die Dauerbremse deaktiviert bleiben soll, bestätigt wird, beispielsweise ein weiterer Taster.

Vorzugsweise enthält die Bremseinrichtung zusätzlich einen Bremswertgeber zum Regeln einer zusätzlichen Radbremse eines Fahrzeuges, wobei die Steuereinheit derart eingerichtet ist, dass, wenn nach Aktivierung der Signalvorrichtung innerhalb einer bestimmten Frist das Bedienelement nicht betätigt wird, die Dauerbremsenintegration durch die Steuereinheit dann aktiviert wird, wenn der Bremswertgeber betätigt wird. Der Bremswertgeber ist vorzugsweise durch ein Bremspedal steuerbar. Die Kommunikation mit der Steuereinheit kann über einen Datenbus erfolgen. Die Dauerbremse wird demgemäß mit der nächsten Betriebsbremsung aktiviert, wenn aufgrund der Kenngrößen die Steuereinheit eine Aktivierung vorsieht. Dies ist beispielsweise dann sinnvoll, wenn der Radbremse aufgrund einer erneuten Betriebsbremsung eine Überhitzung droht.

Vorzugsweise ist die Steuereinheit derart eingerichtet, dass, wenn nach Aktivierung der Signalvorrichtung innerhalb einer bestimmten Frist das Bedienelement zur Aktivierung der Dauerbremsenintegration nicht bestätigt wird, ein erster Fehlerwert in einem Speicher der Steuereinheit gespeichert wird. In einer besonders vorteilhaften Weiterbildung ist die Steuereinheit derart eingerichtet ist, dass, wenn nach Aktivierung der Signalvorrichtung innerhalb der bestimmten Frist die Deaktivierung der Dauerbremsenintegration bestätigt wird, vorzugsweise dadurch, dass das Bedienelement zunächst zum Aktivieren und dann zum Deaktivieren der Dauerbremsenintegration betätigt wird, ein zweiter Fehlerwert in dem Speicher der Steuereinheit gespeichert wird.

Auf diese Weise lässt sich eine bestimmte Situation und auch ein Fahrerverhalten zu einem späteren Zeitpunkt überprüfen. Alternativ kann auch ein Fehlerzähler vorgesehen sein, dessen Zahlwert beispielsweise erhöht wird. Insbesondere können weitere Größen in dem Speicher abgelegt werden, beispielsweise die von der Einrichtung ermittelten Kenngrößen, die den Ausschlag für die Aktivierung der Signalvorrichtung gaben.

Die Erfindung wird nun anhand von zwei Ausführungsbeispielen, die jeweils durch eine Figur dargestellt werden, näher erläutert. Dabei zeigt
- Fig. 1: eine erste Ausführungsform einer erfindungsgemäßen Bremseinrichtung, und
- Fig. 2: eine zweite Ausführungsform einer erfindungsgemäßen Bremseinrichtung.

Gleiche und einander entsprechende Bauteile sind in den Figuren mit denselben Bezugszeichen gekennzeichnet.

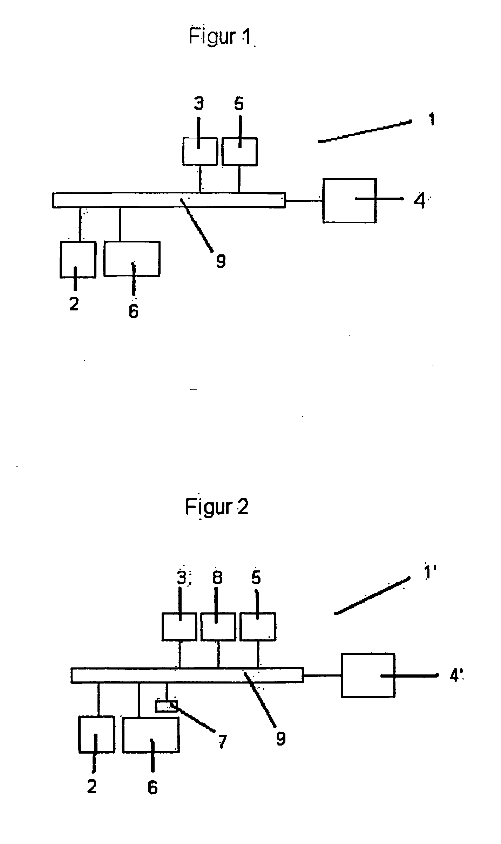

Fig. 1 zeigt eine erste Ausführungsform einer Bremseinrichtung 1 für ein Fahrzeug. Die Einrichtung umfasst ein Bremsregelsystem, hier ein EBS, mit einer Dauerbremse 2, hier eine Strömungsbremse, wobei das Bremsregelsystem für eine Dauerbremsenintegration eingerichtet ist, ein manuell betätigbares Bedienelement 3 zum Aktivieren und Deaktivieren der Dauerbremsenintegration, hier ein Schalter, der in eine "ON-" oder "OFF"-Stellung umlegbar ist, eine elektronische Steuereinheit, die in einer Zentralsteuereinheit 4 des Bremsregelsystems integriert ist, und eine durch die Steuereinheit aktivierbare Signalvorrichtung 5, hier ein Display. Die genannten Komponenten sind mit einem Kommunikationssystem 9, hier ein CAN-Datenbus, verbunden, wodurch eine Kommunikation zwischen den Komponenten möglich ist. Des Weiteren ist eine als Betriebsbremse eingerichtete Radbremse 6, die hier als Scheibenbremse ausgebildet ist, vorgesehen. Die Radbremse 6 ist über das Kommunikationssystem 9 durch die Zentralsteuereinheit 4 des Bremsregelsystems ansteuerbar. Durch Aktivieren der Dauerbremsenintegration wird der Zentralsteuereinheit 4 erlaubt, abhängig von einem vorgegebenen Bremssollwert die Dauerbremse 2 insbesondere zur Unterstützung der Radbremse 6 selbständig anzusteuern.

Die Steuereinheit ist derart eingerichtet, dass bei deaktivierter Dauerbremsenintegration und bei Vorliegen bestimmter Kenngrößen die Signalvorrichtung 5 aktiviert wird. In diesem Ausführungsbeispiel greift die Steuereinheit über das Kommunikationssystem 9 oder direkt auf die Kenngrößen Fahrzeugmasse, Hinterachsenlast, Schlupfbedingungen, Temperatur der Bremse 6 und Topografie zu, die durch geeignete Sensoren, insbesondere auch Sensoren des Bremsregelsystems und/oder weiterer Regelsysteme, wie ABS, oder über Modelle ermittelt wurden. Diese Kenngrößen werden durch die Steuereinheit anhand einer mathematischen Funktion ausgewertet, wobei die Funktion eine Aussage darüber trifft, ob eine Aktivierung der Dauerbremsenintegration sinnvoll ist. Ist dies der Fall, so wird die Signalvorrichtung 5 durch die Steuereinheit automatisch aktiviert, der Fahrer empfängt ein optisches Signal.

Fig. 2 zeigt die zweite Ausführungsform einer erfindungsgemäßen Bremseinrichtung 1'.

Entsprechend der ersten Ausführungsform umfasst die Bremseinrichtung 1' ein Bremsregelsystem, hier ebenfalls ein EBS, mit einer Dauerbremse 2, wiederum eine Strömungsbremse, wobei das Bremsregelsystem für eine Dauerbremsenintegration eingerichtet ist, ein manuell betätigbares Bedienelement 3 zum Aktivieren und Deaktivieren der Dauerbremsenintegration, auch hier ein Schalter, und eine aktivierbare Signalvorrichtung 5, auch hier ein Display. Des Weiteren ist eine Steuereinheit vorgesehen, die in einer Zentralsteuereinheit 4' des Bremsregelsystems integriert ist, und durch die die Signalvorrichtung 5 aktivierbar ist. Die Steuereinheit ist derart eingerichtet, dass bei deaktivierter Dauerbremsenintegration und bei Vorliegen bestimmter Kenngrößen die Signalvorrichtung 5 aktiviert wird.

Des Weiteren enthält die Bremseinrichtung 1' einen Bremswertgeber 8, der über ein Bremspedal betätigbar ist, zum Regeln einer Radbremse 6 des Fahrzeuges, sowie einen Temperatursensor 7 zum Erfassen der Temperatur der Radbremse 6. Zentralsteuereinheit 4', Bedienelement 3, Bremsgeber 8, Signalvorrichtung 5, Dauerbremse 2, Radbremse 6 und Temperatursensor 7 sind mit einem Kommunikationssystem 9, hier ein CAN-Datenbus, verbunden.

Durch den Temperatursensor 7 wird die Temperatur der Radbremse 6, die entsprechend der Radbremse des ersten Beispiels ausgebildet ist, erfasst. Alternativ wäre die Ermittelung der Temperatur auch über ein mathematisches Temperaturmodell möglich. Die Steuereinheit berechnet anhand einer Funktion basierend auf den durch den Temperatursensor gemessenen Temperaturwert und weiterer aussagekräftiger Kenngrößen wie Fahrzeugmasse, Hinterachsenlast, Schlupfbedienungen und Topografie, die durch das EBS-System, durch ein ABS-System oder weiterer Sensoren zur Verfügung gestellt werden, ob die Aktivierung der Dauerbremsenintegration sinnvoll ist. Führt die Berechnung insbesondere zu dem Ergebnis, dass sich eine Überhitzung der Radbremse 6 durch Aktivieren der Dauerbremsenintegration verhindern oder zumindest vermindern lässt, so aktiviert die Steuereinheit automatisch die Signalvorrichtung 5.

Die Steuereinheit ist derart eingerichtet, dass, wenn nach Aktivierung der Signalvorrichtung 5 innerhalb einer kurzen Frist das Bedienelement 3 nicht zur Aktivierung der Dauerbremsenintegration betätigt wird, die Dauerbremsenintegration automatisch durch die Steuereinheit aktiviert wird. Wird der Schalter nach Aktivierung der Signalvorrichtung innerhalb der frist in die "ON", dann aber unmittelbar wieder in die "OFF" Stellung gebracht, erkennt dies die Steuereinheit als Signal, dass es bei einer Deaktivierung der Dauerbremsenintegration bleiben soll, d.h. die Dauerbremsenintegration wird nicht aktiviert.

In diesem Ausführungsbeispiel erfolgt die automatische Aktivierung der Dauerbremsenintegration durch die Steuereinheit lediglich dann, wenn die Temperatur der Radbremse 6 einen festgelegten Temperaturschwellenwert, der in der Steuereinheit in einem Speicher gespeichert ist, überschritten hat. Der Temperaturschwellenwert kennzeichnet hierbei eine Temperatur, die unterhalb der kritischen Temperatur, bei der hoher Verschleiß oder sogar eine Beschädigung der Radbremse 6 eintritt, liegt, bei der aber bei fortschreitender Belastung eine Überhitzung der Radbremse 6 droht.

Die Aktivierung der Dauerbremsenintegration durch die Steuereinheit erfolgt zu dem Zeitpunkt, an dem der Bremswertgeber 8 betätigt wird, also eine Betriebsbremsung erfolgt. Haben sich allerdings bis zur Betätigung des Bremsgebers 8 die Kenngrößen derart geändert, dass die Aktivierung der Dauerbremsenintegration nicht mehr notwendig ist, so belässt die Steuereinheit auch bei Betätigung des Bremswertgebers 8 die Dauerbremsenintegration im deaktiviertem Zustand.

Des Weiteren ist die Steuereinheit derart eingerichtet, dass, wenn nach Aktivierung der Signalvorrichtung 5 innerhalb einer bestimmten Frist das Bedienelement zur Aktivierung der Dauerbremsenintegration nicht betätigt wird, ein erster Fehlerwert im Speicher gespeichert wird. Zusätzlich wird ein zweiter Fehlerwert gespeichert, wenn innerhalb dieser Frist die Deaktivierung der Dauerbremsenintegration bestätigt wird. Des Weiteren werden die Kenngrößen gespeichert, auf deren Grundlage die Signalvorrichtung 5 aktiviert wurde, insbesondere die Temperatur der Radbremse 6. Auf diese Weise lässt sich beispielsweise nachträglich feststellen, ob ein Fahrer trotz der bestehenden Gefahr einer Überhitzung der Radbremse 6 aktiv die automatische Aktivierung der Dauerbremsenintegration durch die Steuereinheit vierhindert hat.

In einer abgewandelten Ausführungsform ist die Steuereinheit derart eingerichtet, dass diese bei deaktivierter Dauerbremsenintegration und Vorliegen bestimmter Kenngrößen die Dauerbremsenintegration sofort aktiviert, unabhängig von einer möglichen Aktivierung einer Signalvorrichtung. Die automatische Aktivierung der Dauerbremsenintegration erfolgt in diesem Fall dann, wenn die Temperatur der Radbremse 6 einen festgelegten Temperaturschwellwert überschritten hat. Eine Aktivierung der Signalvorrichtung 5 durch die Steuereinheit kann ebenfalls erfolgen, um den Fahrer auf die Aktivierung der Dauerbremsenintegration hinzuweisen.

In diesen Ausführungsformen ist die Steuereinheit derart eingerichtet, dass die Signalvorrichtung 5 einmalig aktiviert wird. Alternativ ist auch eine mehrfache, insbesondere zyklische Aktivierung möglich.

## Patentansprüche

1. Bremseinrichtung (1, 1') für ein Fahrzeug, umfassend ein Bremsregelsystem (4, 4') mit mindestens einer Dauerbremse (2), wobei das Bremsregelsystem für eine Dauerbremsenintegration eingerichtet ist, ein manuell betätigbares Bedienelement (3) zum zumindest Aktivieren und Deaktivieren der Dauerbremsenintegration und eine Steuereinheit, die Steuereinheit derart eingerichtet ist, dass bei deaktivierter Dauerbremsenintegration und bei Vorliegen bestimmter Kenngröße, wie Fahrzeugmasse, Hinterachsenlast, Schlupfbedingungen, Topographie und/oder Bremsentemperatur eine durch die Steuereinheit aktivierbare, zur Bremseinrichtung gehörende Signalvorrichtung (5) aktiviert wird und/oder die Dauerbremsenintegration aktiviert wird.

2. Einrichtung nach Anspruch 1, wobei die Einrichtung einen oder mehrere Sensoren (7) zum Ermitteln von Kenngrößen aufweist.

3. Einrichtung nach einem der vorhergehenden Ansprüche, dass die Einrichtung derart eingerichtet ist, dass diese als Kenngröße die Temperatur einer oder mehrerer Radbremsen eines oder mehrerer Fahrzeugräder, insbesondere Fahrzeugräder einer Zugfahrzeug-Anhänger-Kombination, ermittelt.

4. Einrichtung nach einem der vorhergehenden Ansprüche in Verbindung mit Anspruch 2, wobei einer der Sensoren ein Temperatursensor (7) zum Erfassen der Temperatur einer Radbremse (6) eines Fahrzeugsrades ist.

5. Einrichtung nach einem der vorhergehenden Ansprüche, wobei die Steuereinheit derart eingerichtet ist, dass die Temperatur einer Radbremse (6) eines Fahrzeugsrades über ein mathematisches Temperaturmodell ermittelt wird.

6. Einrichtung nach einem der vorhergehenden Ansprüche, wobei die Steuereinheit derart eingerichtet ist, dass die Signalvorrichtung (5) einmalig oder zyklisch aktiviert wird.

7. Einrichtung nach einem der vorhergehenden Ansprüche, wobei die Signalvorrichtung (5) derart ausgebildet ist, dass sie bei Aktivierung ein akustisches, optisches und/oder haptisches Signal erzeugt.

8. Einrichtung nach einem der vorhergehenden Ansprüche, wobei die Steuereinheit derart eingerichtet ist, dass, wenn nach Aktivierung der Signalvorrichtung (5) innerhalb einer bestimmten Frist das Bedienelement (3) nicht betätigt wird, die Steuereinheit die Dauerbremsenintegration aktiviert.

9. Einrichtung nach einem der Ansprüche 1 bis 7, wobei die Steuereinheit derart eingerichtet ist, dass, wenn nach Aktivierung der Signalvorrichtung (5) innerhalb einer bestimmten Frist das Bedienelement (3) nicht betätigt wird und wenn die Temperatur zumindest einer Radbremse (6) des Fahrzeugs einen festgelegten Temperaturschwellenwert überschritten hat, die Steuereinheit die Dauerbremsenintegration aktiviert.

10. Einrichtung nach Anspruch 8 oder 9, zusätzlich enthaltend einen Bremswertgeber (8) zum Regeln einer Radbremse (6) eines Fahrzeuges, wobei die Steuereinheit derart eingerichtet ist, dass, wenn nach Aktivierung der Signalvorrichtung (5) innerhalb einer bestimmten Frist das Bedienelement (3) nicht betätigt wird, die Dauerbremse (2) durch die Steuereinheit dann aktiviert wird, wenn der Bremswertgeber (8) betätigt wird.

11. Einrichtung nach einem der vorhergehenden Ansprüche, wobei die Steuereinheit derart eingerichtet ist, dass, wenn nach Aktivierung der Signalvorrichtung (5) innerhalb einer bestimmten Frist das Bedienelement zur Aktivierung der Dauerbremsenintegration nicht bestätigt wird, ein erster Fehlerwert in einem Speicher der Steuereinheit gespeichert wird.

12. Einrichtung nach einem der Ansprüche 8 bis 11, wobei die Steuereinheit derart eingerichtet ist, dass, wenn nach Aktivierung der Signalvorrichtung (5) innerhalb der bestimmten Frist die Deaktivierung der Dauerbremsenintegration bestätigt wird, vorzugsweise **dadurch**, dass das Bedienelement (3) zunächst zum Aktivieren und dann zum Deaktivieren der Dauerbremsenintegration betätigt wird, ein zweiter Fehlerwert in dem Speicher der Steuereinheit gespeichert wird.

13. Verfahren zum Betreiben einer Bremseinrichtung für ein Fahrzeug mit einem Bremsregelsystem (4, 4') mit mindestens einer Dauerbremse (2), wobei das Bremsregelsystem für eine Dauerbremsenintegration eingerichtet ist, und einem manuell betätigbaren Bedienelement (3), mittels dem die Dauerbremsenintegration aktivierbar oder deaktivierbar ist, **dadurch gekennzeichnet, dass** bei deaktivierter Dauerbremsenintegration und bei Vorliegen bestimmter Kenngrößen, wie Fahrzeugmasse, Hinterachsenlast, Schlupfbedingungen, Topographie und/oder Bremsentemperatur, eine zur Bremseinrichtung gehörende Signalvorrichtung (5) aktiviert wird und/oder die Dauerbremsenintegration aktiviert wird.

14. Verfahren nach Anspruch 13, wobei die Signalvorrichtung (5) einmalig oder zyklisch aktiviert wird.

15. Verfahren nach Anspruch 13 oder 14, wobei als Kenngröße die Temperatur einer zusätzlichen Radbremse (6) gemessen wird.

16. Verfahren nach einem der Ansprüche 13 bis 15, wobei überprüft wird, ob das Bedienelement (3) nach Aktivierung des Signalelementes innerhalb einer bestimmten Frist betätigt wird, und, falls das Bedienelement (3) nicht betätigt wird, die Dauerbremsenintegration automatisch aktiviert wird.

17. Verfahren nach Anspruch 16, wobei die Dauerbremensintegration erst dann aktiviert wird, wenn ein Bremswertgeber (8) zum Regeln einer Radbremse (6) betätigt wird.

## Claims

1. Brake device (1, 1') for a vehicle, comprising a brake control system (4, 4') with at least one permanent brake (2), wherein the brake control system is designed to perform permanent brake integration, a manually actuable operator control element (3) for at least activating and deactivating the integration of the permanent brake and a control unit, **characterized in that** the control unit is designed in such a way that when the permanent brake integration system is deactivated and when a specific characteristic variable, such as the mass of the vehicle, rear axle load, slip conditions, topography and/or temperature of the brake, is present, a signal device (5) which can be activated by the control unit and is part of the brake device is activated, and/or the permanent brake integration system is activated.

2. Device according to Claim 1, wherein the device has one or more sensors (7) for determining characteristic variables.

3. Device according to one of the preceding claims, **characterized in that** the device is designed in such a way that it determines, as a characteristic variable, the temperature of one or more wheel brakes of one or more vehicle wheels, in particular vehicle wheels of a towing vehicle-trailer combination.

4. Device according to one of the preceding claims in conjunction with Claim 2, wherein one of the sensors is a temperature sensor (7) for sensing the temperature of a wheel brake (6) of a vehicle wheel.

5. Device according to one of the preceding claims, wherein the control unit is designed in such a way that the temperature of a wheel brake (6) of a vehicle wheel is determined by means of a mathematical temperature model.

6. Device according to one of the preceding claims, wherein the control unit is designed in such a way that the signal device (5) is activated once or cyclically.

7. Device according to one of the preceding claims, wherein the signal device (5) is embodied in such a way that when activated it generates an acoustic, optical and/or haptic signal.

8. Device according to one of the preceding claims, wherein the control unit is designed in such a way that the control unit activates the permanent brake integration system if the operator control element (3) is not actuated within a specific period after activation of the signal device (5).

9. Device according to one of Claims 1 to 7, wherein the control unit is designed in such a way that the control unit activates the permanent brake integration system if the operator control element (3) is not actuated within a specific period after activation of the signal device (5) and if the temperature of at least one wheel brake (6) of the vehicle has exceeded a defined temperature threshold value.

10. Device according to Claim 8 or 9, additionally containing a brake value signal generator (8) for controlling a wheel brake (6) of a vehicle, wherein the control unit is designed in such a way that the permanent brake (2) is activated by the control unit when the brake value signal generator (8) is actuated if the operator control element (3) is not actuated within a specific period after activation of the signal device (5).

11. Device according to one of the preceding claims, wherein the control unit is designed in such a way that a first fault value is stored in a memory of the control unit if the operator control element is not actuated in order to activate the permanent brake integration system within a specific period after activation of the signal device (5).

12. Device according to one of Claims 8 to 11, wherein the control unit is designed in such a way that a second fault value is stored in the memory of the control unit if the deactivation of the permanent brake integration system is confirmed within the specific period after activation of the signal device (5), preferably by virtue of the fact that the operator control element (3) is firstly actuated in order to activate and then to deactivate the permanent brake integration system.

13. Method for operating a brake device for a vehicle having a brake control system (4, 4') with at least one permanent brake (2), wherein the brake control system is designed to perform permanent brake integration, and a manually actuable operator control element (3), by means of which the permanent brake integration system can be activated or deactivated, **characterized in that**, when the permanent brake integration system is deactivated and when a specific characteristic variable, such as the mass of the vehicle, rear axle load, slip conditions, topography and/or temperature of the brakes, is present, a signal device (5) which is part of the brake device is activated, and/or the permanent brake integration system is activated.

14. Method according to Claim 13, wherein the signal device (5) is activated once or cyclically.

15. Method according to Claim 13 or 14, wherein the temperature of an additional wheel brake (6) is measured as a characteristic variable.

16. Method according to one of Claims 13 to 15, wherein it is checked whether the operator control element (3) is actuated within a specific period after activation of the signal element, and the permanent brake integration system is automatically activated if the operator control element (3) is not actuated.

17. Method according to Claim 16, wherein the permanent brake integration system is not activated until a brake value signal generator (8) is actuated for controlling a wheel brake (6).

## Revendications

1. Dispositif de freinage (1, 1') pour un véhicule, comprenant un système de régulation de frein (4, 4') doté d'au moins un frein continu (2), le système de régulation de frein étant configuré pour une intégration du freinage continu, un élément de commande (3) actionnable manuellement pour au moins activer et désactiver l'intégration du freinage continu et une unité de commande, **caractérisé en ce que** l'unité de commande est configurée de telle sorte que lorsque l'intégration du freinage continu est désactivée et en présence d'une grandeur caractéristique donnée telle que la masse du véhicule, la charge de l'essieu arrière, des conditions de patinage, la topographie et/ou la température des freins, un dispositif de signalisation (5) activable par l'unité de commande et faisant partie du dispositif de freinage est activé et/ou l'intégration du freinage continu est activée.

2. Dispositif selon la revendication 1, le dispositif présentant un ou plusieurs capteurs (7) pour déterminer des grandeurs caractéristiques.

3. Dispositif selon l'une des revendications précédentes, tel que le dispositif est configuré de telle sorte qu'il détermine comme grandeurs caractéristiques la température d'un ou plusieurs freins de roue d'une ou plusieurs roues de véhicule, notamment les roues de véhicule d'une combinaison tracteur-remorque.

4. Dispositif selon l'une des revendications précédentes en combinaison avec la revendication 2, l'un des capteurs étant un capteur de température (7) pour détecter la température d'un frein de roue (6) d'une roue de véhicule.

5. Dispositif selon l'une des revendications précédentes, l'unité de commande étant configurée de telle sorte que la température d'un frein de roue (6) d'une roue de véhicule est déterminée par le biais d'un modèle mathématique de la température.

6. Dispositif selon l'une des revendications précédentes, l'unité de commande étant configurée de telle sorte que le dispositif de signalisation (5) est activé une fois ou de manière cyclique.

7. Dispositif selon l'une des revendications précédentes, le dispositif de signalisation (5) étant configuré de telle sorte que lors de l'activation, il génère un signal sonore, visuel et/ou tactile.

8. Dispositif selon l'une des revendications précédentes, l'unité de commande étant configurée de telle sorte que si, après l'activation du dispositif de signalisation (5), l'élément de commande (3) n'est pas actionné après un délai donné, l'unité de commande active l'intégration du freinage continu.

9. Dispositif selon l'une des revendications 1 à 7, l'unité de commande étant configurée de telle sorte que si, après l'activation du dispositif de signalisation (5), l'élément de commande (3) n'est pas actionné après un délai donné et si la température d'au moins un frein de roue (6) du véhicule a dépassé un seuil de température fixé, l'unité de commande active l'intégration du freinage continu.

10. Dispositif selon la revendication 8 ou 9, contenant en plus un codeur de valeur de frein (8) pour réguler un frein de roue (6) d'un véhicule, l'unité de commande étant configurée de telle sorte que si, après l'activation du dispositif de signalisation (5), l'élément de commande (3) n'est pas actionné après un délai donné, le frein continu (2) est activé par l'unité de commande lorsque le codeur de valeur de frein (8) est actionné.

11. Dispositif selon l'une des revendications précédentes, l'unité de commande étant configurée de telle sorte que si, après l'activation du dispositif de signalisation (5), l'élément de commande destiné à activer l'intégration du freinage continu n'est pas actionné après un délai donné, une première valeur de défaut est enregistrée dans une mémoire de l'unité de commande.

12. Dispositif selon l'une des revendications 8 à 11, l'unité de commande étant configurée de telle sorte que si, après l'activation du dispositif de signalisation (5), la désactivation de l'intégration du freinage continu est confirmée après le délai donné, de préférence en ce que l'élément de commande (3) est tout d'abord actionné pour activer et ensuite pour désactiver l'intégration du freinage continu, une deuxième valeur de défaut est enregistrée dans la mémoire de l'unité de commande.

13. Procédé de fonctionnement d'un dispositif de freinage pour un véhicule comprenant un système de régulation de frein (4, 4') doté d'au moins un frein continu (2), le système de régulation de frein étant configuré pour une intégration du freinage continu, et un élément de commande (3) actionnable manuellement au moyen duquel l'intégration du freinage continu peut être activée ou désactivée, **caractérisé en ce que** lorsque l'intégration du freinage continu est désactivée et en présence de grandeurs caractéristiques données telles que la masse du véhicule, la charge de l'essieu arrière, des conditions de patinage, la topographie et/ou la température des freins, un dispositif de signalisation (5) faisant partie du dispositif de freinage est activé et/ou l'intégration du freinage continu est activée.

14. Procédé selon la revendication 13, le dispositif de signalisation (5) étant activé une fois ou de manière cyclique.

15. Procédé selon la revendication 13 ou 14, la grandeur caractéristique mesurée étant la température d'un frein de roue (6) supplémentaire.

16. Procédé selon l'une des revendications 13 à 15, un contrôle étant effectué pour vérifier si, après l'activation de l'élément de signalisation (5), l'élément de commande (3) est actionné après un délai donné et, si l'élément de commande (3) n'est pas actionné, l'intégration du freinage continu est activée automatiquement.

17. Procédé selon la revendication 16, l'intégration du freinage continu n'étant activée qu'une fois qu'un codeur de valeur de frein (8) destiné à réguler un frein de roue (6) est actionné.
